# EUROPEAN PATENT SPECIFICATION

(11) **EP 3 548 311 B1**
(45) Date of publication and mention of the grant of the patent: **30.03.2022**
(21) Application number: 17809163.3
(22) Date of filing: 29.11.2017
(51) Int. Cl.: B60C 11/12, B60C 11/03

(54) **IMPROVED TIRE TREADS HAVING POSITIVELY INCLINED SIPES**
VERBESSERTE REIFENLAUFFLÄCHEN MIT POSITIV GENEIGTEN LAMELLEN
BANDES DE ROULEMENT AMÉLIORÉES AYANT DES LAMELLES À INCLINAISON POSITIVE

(30) Priority: 30.11.2016 WO PCT/US2016/064240
(43) Date of publication of application: 09.10.2019
(73) Proprietor: Compagnie Générale des Etablissements Michelin, 63000 Clermont-Ferrand (FR)
(72) Inventor: LIMROTH, John, Greenville, South Carolina 29605 (US); COLLETT, Mark, Greenville, South Carolina 29605 (US)
(74) Representative: Casalonga
(86) International application number: PCT/US2017/063794
(87) International publication number: WO 2018/102460

(56) References cited:
- DE-A1- 2 908 219
- JP-A- H05 338 418
- JP-A- 2002 225 512
- JP-A- 2003 011 619
- US-A1- 2002 166 613
- US-B1- 6 382 283

## Description

### BACKGROUND

### Field

This disclosure relates generally to tire treads, and more particularly, to tire treads having sipes extending into the tread thickness, where each of the sipes increase in width with increased depth.

### Description of the Related Art

Tire treads are known to include a pattern of discontinuities forming a tread pattern arranged along an outer, ground-engaging side of the tread to provide sufficient traction and handling performance during particular operating conditions. Discontinuities may comprise grooves and/or sipes. Grooves provide void into which water, mud, or other environmental materials may be diverted to better allow the outer, ground-engaging side of the tread to engage a tire operating surface (that is, a surface upon which the tire operates, such as a road or ground surface). Sipes are slits or narrow grooves that at least partially close when engaging a tire operating surface, but which provide edges along the outer, ground-engaging side of the tread to generate traction. By virtue of providing a pattern of discontinuities, tread elements comprising ribs and/or lugs are formed in the tread.

An example of a tread having a pattern of discontinuities is shown in DE 2908219 A1. DE 2908219 Al discloses a tread strip having a profile element delimited by two grooves having a depth. Incisions having a width within the profile element are spaced apart and define lamellae. One wall of the incision forms the engagement edge with the surface of the tread, while the other wall has the leading edge of the lamellae. The incisions form an acute angle with the normal of the tread. The incisions are inclined in the direction of rotation of the tire and act upon acceleration of the vehicle.

It is well known that the tire tread wears during tire operation as the tire tread slips relative the tire operating surface at the trailing edge of a tread element within a tire footprint. The tire footprint is the area of contact between the tire and the tire operating surface, and which is also referred to as a contact patch. Therefore, there is a desire to reduce this slip and the impact this slip has on tread wear during tire operation.

While it is known to alter the depthwise inclination of a lateral sipe by rotating the depthwise inclination of the lateral sipe in the direction of tire rotation and in the direction of the tread length as the lateral sipe extends outwardly from the tread depth and towards the outer, ground-engaging side of the tread (which is referred to as being positively inclined) to improve wear performance, it has been determined that improvements in tread wear are not consistently observed through the worn life of the tread. Therefore, there is a need to improve the consistency of tread wear performance over the worn life of the tread when employing positively inclined lateral sipes or lateral grooves.

### SUMMARY

The above problem is solved by a tire tread according to independent claim 1 and a method of forming a lateral sipe in a tire tread according to independent claim 14. The dependent claims relate to advantageous embodiments.

The foregoing and other objects, features and advantages will be apparent from the following more detailed descriptions of particular embodiments, as illustrated in the accompanying drawing wherein like reference numbers represent like parts of the invention.

### BRIEF DESCRIPTION OF THE DRAWINGS

FIG. **1** is a partial perspective view of a tire tread showing a plurality of tread blocks separated by a plurality of discontinuities forming a plurality of lateral and longitudinal grooves and a plurality of lateral sipes, according to an illustrative example not falling under the scope of the claims.
FIG. **2** is a sectional side view of a lateral sipe of the tire tread of FIG. 1 shown in a normally open arrangement,
FIG. **3** is a sectional side view of the lateral sipe of FIG. 2 shown in a closed arrangement.
FIG. **4** is a sectional side view of the lateral sipe of FIG. 3 shown in a worn arrangement.
FIG. **5** is a sectional side view of a positively inclined lateral sipe with a submerged void arranged at a depthwise terminal end of the sipe, < - > <according to an illustrative example not falling under the scope of the claims.>
FIG. **6** is a sectional side view of a lateral sipe of a tire according to the invention shown in a normally open arrangement and gradually increasing in width in a continuous manner, in accordance with an exemplary embodiment.
FIG. **7** is a sectional side view of the sipe shown in Fig. 6 which is generally similar to the illustrative example not falling under the scope of the claims and shown in FIG. 2 shown in a closed arrangement.
FIG. **8** is a sectional side view of a lateral sipe extending into the tread thickness along a non-linear path and gradually increasing in width in a continuous manner, in accordance with an alternative embodiment of the sipe shown in Fig. 6 which is generally similar to the illustrative example not falling under the scope of the claims and shown in FIG. 2.
FIG. **9** is a sectional side view of a lateral sipe extending into the tread thickness along a non-linear path and gradually increasing in width in an intermittent manner, in accordance with an alternative embodiment of the sipe shown in Fig. 6 which is generally similar to the illustrative example not falling under the scope of the claims and of the sipe shown in Fig. 6 which is generally similar to the illustrative example not falling under the scope of the claims and shown in FIG. 2.
FIG. **10** is a top elevational view showing the discontinuity of FIG. 2 extending linearly along its length, which extends in the lateral direction of the tire tread, in accordance with an illustrative example not falling under the scope of the claims.
FIG. **11** is a top elevational view showing the discontinuity of FIG. **2** optionally extending linearly along its length, which extends partially in the lateral direction (that is, biased to the lateral direction) of the tire tread, in accordance with an illustrative example not falling under the scope of the claims.
FIG. **12** is a top elevational view showing the discontinuity of FIG. **2** optionally extending non-linearly along its length, in accordance with an illustrative example not falling under the scope of the claims.
FIG. **13** is a perspective view of a tire tread having a windowpane sipe, in accordance with an illustrative example not falling under the scope of the claims.
FIG. **14** is a perspective view of the windowpane sipe shown in FIG. **13**.
FIG. **15** is a sectional side view of the windowpane sipe of FIGS. **13** and **14**, the sipe being positively angled and having an increasing width in accordance with an illustrative example not falling under the scope of the claims.

### DETAILED DESCRIPTION OF PARTICULAR EMBODIMENTS

The present invention includes tire treads, tires including said treads, and methods for improving tire wear. For each, a tire tread includes one or more positively inclined lateral sipes each comprising a narrow groove having a width that allows the sipe to close or, in other words, opposing faces of the tire tread forming the width of the sipe to contact, during tire operation. This contact results in rubber-to-rubber contact at some juncture along the height of the lateral sipe. However, by maintaining a width greater than zero (0) at least nearest the depthwise terminal end (referred to as a second terminal end of the lateral sipe herein), the lateral sipe remains open at a worn stage where the opposing faces of the tread forming the lateral sipe remain spaced apart during tire operation. These lateral sipes are characterized as having a width-to-height ratio of a particular value, where the ratio of the lateral sipe width to the lateral sipe height is 1 to 10 (1:10) to 1 to 40 (1:40), for example. These sipes may have a constant or variable width. The width of the lateral sipe widens as the lateral sipe extends deeper into the tread thickness This widening lateral sipe may or may not be combined with the characterization of having a particular width-to-height ratio. By virtue of this, the benefits of positively inclining lateral sipes are better realized, and more consistent wear performance over the worn life of the tire tread is achieved.

It has been observed that while positively inclined lateral sipes improve tire tread wear performance by reducing the slip generated when a tread block exits a tire footprint, the improvement can be reduced when at least a portion of the sipe width closes. It has been determined, however, that the benefits of positively inclining the lateral sipe are better (more efficiently) realized when the sipe remains open, that is, where this rubber-to-rubber contact is eliminated. Because the effect of Poisson's ratio (bulging) decreases as the tread thickness decreases during the worn life of the tire, the improvements described herein utilize this characteristic to configure positively inclined lateral sipes to remain open (no rubber-to-rubber contact) at a worn stage of a tire tread, that is, after a portion of the tread thickness has been removed, recognizing that the Poisson effect will be reduced at the worn stage, such that the bulging of the tread from each opposing face forming the lateral sipe is reduced. It is noted that for any given tread, tread wear benefits attributed to positively inclining lateral sipes vary with changes in the positive inclination angle. Of particular note, it has been observed that tread wear benefits increase with increasing positive inclination angles up to an optimum positive inclination angle, and thereafter the tread wear benefits decrease with increasing positive inclination angles, assuming the sipe remains open during tire operation. However, it has also been determined that when a lateral sipe closes, due to the Poisson effect, the lateral sipe operates as if it was originally formed at a lower positive inclination angle. Therefore, in certain instances, where the tread wear benefits vary between different positive inclination angles, an original positive inclination angle is selected that is greater than the optimum positive inclination angle. This selection is performed with regard to the new stage, relative to an optimum positive inclination angle for the new stage. This originally formed lateral sipe inclination angle (the "original positive inclination angle") references the molded inclination angle or an undeformed (unloaded) inclination angle of the lateral sipe at the new stage. It is appreciated that these positive angles may be associated with an average positive inclination angle for the lateral sipe, which is later introduced below. By selecting a positive inclination angle greater than the optimum, when the tread is compressed under loaded tire operation, in the new (or first) stage, the lateral sipe operates as if the unloaded positive inclination is lower, meaning, the tread wear benefits are equivalent to those that would otherwise be achieved at a lower angle if the sipe would not have closed. So, it is possible to form the sipe at a less-than-optimum original positive inclination angle that is greater than the optimum, and still obtain optimum or near optimum tread wear performance when the sipe closes during tire operation in the new stage and wen the sipe remains open at a subsequent worn stage. By allowing the positively inclined lateral sipe width to remain open at the worn stage of the tread thickness, the wear benefits resulting from positively inclining the lateral sipe are better realized. To improve tread wear consistency over the worn life of the tire tread, providing a more gradual reduction in the Poisson effect over the depth of the positively inclined lateral sipe may be achieved by allowing the width of the lateral sipe to increase as the sipe extends deeper into the tread thickness.

As a lead-in to further discussions surrounding the lateral sipes, a tire tread is more generally introduced. A tire tread can generally be described as having a length extending in a longitudinal direction. As the tread may be formed with the tire, or separately for later installation on the tire, such as during retreading operations, for example, the lengthwise direction of the tread is a circumferential (that is, annular) direction when the tread is arranged on a tire. A tire tread also has a width extending in a lateral direction, the lateral direction being perpendicular to the longitudinal direction. A tire tread also has a thickness extending in a depthwise direction from an outer, ground-engaging side of the tread. The thickness terminates at a bottom side of the tread. Each of the depthwise direction, the longitudinal direction, and the widthwise direction of the tread is perpendicular to the other.

As noted previously, one or more positively inclined lateral sipes are arranged within the tread. Each sipe has a length extending primarily in the direction of the tread width, that is, in a direction 45 degrees or less biased from the direction of the tread width (that is, the lateral direction). The sipe length may also extend linearly or non-linearly along any linear or non-linear path. Each sipe also has a width (also referred to as a thickness) extending perpendicular to the lateral sipe length. The sipe width is defined by a pair of opposing faces of the tread. The sipe width is configured such that: (1) while in a new (unworn) stage, the sipe width closes along at least a portion of the sipe depth during operation of a loaded tire, where the tire tread is exposed to compressive forces within a footprint of the tire, and (2) at a worn stage, where a portion of the tread thickness has been removed such that the depth or height of the lateral sipe has been reduced, the sipe width remains open during operation of a loaded tire. This may be achieved by selecting a sipe having a particular width that is not too narrow, namely a width that widens with increasing extension into the tread depth, and a sipe that is characterized as having a particular width-to-height ratio. The sipe height is measured in the direction of the tread thickness, which is a radial direction when the tread is installed on an annular tire. Because the depthwise extension of the lateral sipe extends into the tread positively inclined relative to the direction of the tread thickness, the distance by which the depthwise extension of the lateral sipe extends within the tread thickness is greater than the height of the lateral sipe.

The lateral sipe width is variable, generally increasing as the sipe extends deeper into the tread thickness from a first terminal end and to a second terminal end. For any sipe, this increase in width may be intermittent or continuous, or any combination thereof, along the depth of the sipe. When increasing continuously, this may occur gradually in a linear or curvilinear progression. The sipe width is configured to articulate between an open configuration and a closed configuration as the tire rotates during tire operation, where in the closed configuration, the pair of opposing faces at or near the first terminal end engage one another while the pair of opposing faces at or near the second terminal end remain spaced apart. In certain instances, the lateral sipe width ranges from 0 to 1.4 mm (millimeters) at any location along the sipe height, and in more specific instances, ranges from 0.15 mm to 0.2 mm at any location along the sipe height. At the depthwise terminal end (the second terminal end) of the lateral sipe, the lateral sipe width is greater than zero (0), and in certain instances, at least 0.15 to 0.2 mm wide. In certain instances, the depthwise extension of the lateral sipe into the tread thickness can be described as having a thin portion and a wide portion, the thin portion having a width that is thinner than a width of the wide portion. For example, the thin portion may have a width of 0 to 0.2 mm while the thick portion is greater than the thin portion and up to 1.4 mm.

It is also appreciated, whether or not the sipe width varies the lateral sipe is characterized as having a particular relationship between the sipe width and sipe height, which is referred to herein as a width-to-height ratio. It is appreciated that the deeper the sipe extends into the tread thickness, the more each opposing face bulges into the sipe width due to the Poisson effect - for any given tread design. Therefore, for the purposes of achieving the purposes discussed herein, as the height of the lateral sipe increases, so does the sipe width - within a desired range of a width-to-height ratio. For example, in certain instances, for a positively inclined lateral sipe having a constant sipe width, in the new stage, sipe closure is obtained when the sipe width is 0.2 mm and the sipe height is 8 mm, which provides a 1:40 width-to-height ratio. By further example, in another instance, sipe closure in the new stage is obtained for a positively inclined lateral sipe having a constant sipe width when the sipe width is 0.15 mm and the sipe height is 6 mm, which also provides a 1:40 width-to-height ratio. In yet another example, sipe closure in the new stage is obtained for a positively inclined lateral sipe having a constant sipe width when the sipe width is 0.4 mm and the sipe height is 8 mm, which provides a 1:20 width-to-height ratio. The is width-to-height ratio is at least 1:10, It is appreciated that the width is used in the width-to-height ratio is either the width of a constant width lateral sipe or the average width of a variable width sipe.

As noted previously, in extending into the tread thickness, each sipe extends from a first terminal end and to a second terminal end of the sipe to define a height of the sipe, the first terminal end being located closest to the outer, ground-engaging side of the tread relative to the second terminal end. It is appreciated that the first terminal end may be arranged along the outer, ground-engaging side or submerged below the outer, ground-engaging side, such as when the sipe is a submerged sipe that is later exposed to the outer, ground-engaging side after a thickness of the tread is worn away or otherwise removed.

Each sipe also extends into the tread thickness along a path from the first terminal end and to the second terminal end. This path is defined to extend midway between a pair of opposing faces of the tire tread that form the lateral sipe, the path extending midway between these opposing faces for the full depth of the lateral sipe. This path may be linear or non-linear. For each sipe, the path is characterized as having an average inclination angle that is positive. This average inclination angle is determined by averaging the inclination angles for the path over the full length of the path. This average inclination angle may be obtained by using linear regression when the path is non-linear. In such instances, linear regression is used to determine a line based upon the non-linear path.

In measuring the angularity of the non-linear path, and any portion thereof, or the path along which any face forming the discontinuity extends, as discussed herein, from the direction of the tread thickness, "the direction of the tread thickness" is also referred to as the "depthwise" direction of the tread. "The direction of the tread thickness" extends perpendicular to the tread width and the tread length. When the tire tread is installed on an annual tire, "the direction of the tread thickness" is a radial direction, extending radially from a rotational axis of the tire. Consistent therewith, such angularity can also be measured relative to a plane extending in both the direction of the tread width and the direction of the tread thickness, where "the direction of the tread thickness" extends along this plane. Angularity is measured with reference to a reference line extending in the direction of the tread thickness or the plane and an origin located on the reference line or plane as the subject portion of any path being measured extends toward the outer, ground-engaging side of the tread from within the tread thickness. This origin is not necessarily the location for measuring the angle, but rather a location to describe a positively or negatively biased angle. It is noted that a positive angle is an angle that extends in the direction of intended tire rotation relative the direction of the tread thickness as the angle extends towards the outer, ground-engaging side, while a negative angle extends in the opposite direction. In other words, a positively inclined lateral sipe extends outward from within the tread thickness and towards the outer, ground-engaging side of the tread, the lateral sipe being inclined towards the intended direction of tire rotation. Any non-zero angle can be expressed as forming two vectors, one vector extending in the direction of the tread thickness towards the outer, ground-engaging side and the other vector extending in the longitudinal direction of the tread, where for a positive angle, this latter (second) vector extending in the longitudinal direction extends in the direction of intended forward tire rotation, and where for a negative angle, this latter vector extends in the direction opposite to the direction of intended forward tire rotation (that is, in the direction of intended reverse tire rotation). The direction of intended forward rotation is the direction the tire rotates when the vehicle upon which it is mounted travels in a forward direction, that is, in the direction opposite of a reverse direction. Any portion of the tread positively inclined leans in the direction of intended forward rotation as the portion of the tread extends from within the tread thickness and towards the outer, ground-engaging side of the tread.

While a positive inclination angle requires the average inclination angle to be greater than zero (0), and while the average inclination angle may be any angle greater than zero (0), in specific instances, the average inclination angle is at least 3 degrees or at least 5 degrees. In other instances, the average inclination angle is up to 15 degrees or up to 60 degrees. The path along which the sipe extends depthwise into the tread thickness is positively inclined the full depth of the sipe, where in certain instances, beyond being inclined at an angle greater than zero (0), such as by any angle contemplated above with regard to the average inclination angle, for example. If the positive inclination angle for a lateral sipe is selected to be greater than an optimum positive inclination angle for a lateral sipe or groove that remains open (does not close) during tire operation in a new (unworn) stage, it is appreciated that the positive inclination angle for the lateral sipe can be any angle greater than the optimum. For example, in certain instances, the positive inclination angle employed for the lateral sipe may be double (2x) the optimum positive inclination angle or may be 10 to 30 degrees greater than the optimum positive inclination angle. It is also noted that when selecting a particular positive inclination angle for the lateral sipe, directionally, the width-to-height ratio will increase with increasing positive inclination angles and decrease with decreasing positive inclination angles. In view of this, by example, the lateral sipe width for a higher degree positive inclination angle would be thinner as compared to the width for a lateral sipe width for a lower degree positive inclination angle.

Because selection of a positive inclination angle, width, and width-to-height ratio for any lateral sipe will vary based upon other factors, such as the tread material (compound) and the tread block size, in one example, where the tread is made of an allseason tread material, lateral sipes having an average width of 0.4 mm arranged in tread blocks (lugs) that are spaced along the tread length, center-to-center, by 9 mm and have a height of 8 mm, have a width-to-height ratio of 1:20 and an average positive inclination angle of 20 degrees, where 10 degrees is optimum. For a winter tire using a lower modulus tread material and/or smaller blocks, a width-to-height ratio of 1:10 may be employed, for example.

Likewise, a method of forming a lateral sipe in a tire tread is generally described, where method includes determining for improved wear performance an optimum positive inclination angle for a lateral void that remains open during tire operation, and then determining and ultimately forming a lateral sipe within the tread thickness having an inclination angle that is greater than the optimum positive inclination angle. The optimum positive inclination angle may be determined using finite element analysis or other modelling or simulation programs, or any other method known to one of ordinary skill in the art. More specifically, the lateral sipe being determined and formed in the tread thickness has a length extending primarily in the direction of the tread width and a width extending perpendicular to the lateral sipe length. The lateral sipe has a depthwise extension extending into the tread thickness from a first terminal end to a second terminal end along a path by a height measured in the direction of the tread thickness, the first terminal end being arranged closest to the outer, ground-engaging side relative to the second terminal end. The path has an average inclination angle that is greater than the optimum positive inclination angle, the average inclination angle being measured in the longitudinal direction of the tread relative to the depthwise direction whereby the average inclination angle is angled toward an intended forward rotating direction of the tread in the longitudinal direction. The lateral sipe is characterized as having a width-to-height ratio associating the lateral sipe width to the sipe height, the width-to-height ratio equaling 1:10 to 1:40. The lateral sipe has a width formed by a pair of opposing faces of the tread extending depthwise within the tread thickness, the sipe width being configured to, at an unworn stage, close along at least a portion of the sipe depth during operation of a loaded tire, and being configured to, at a worn stage, remain open during operation of the loaded tire. At this worn stage, the tire tread thickness may be at any location be 25% worn, 50% worn, 75% worn, or at least 2 mm or 4 mm worn, for example.

It is noted that any tire tread may include a plurality of these lateral sipes, such as where the plurality of lateral sipes form all lateral sipes contained in the tire tread, or only a portion thereof. It may be that a plurality of these lateral sipes are configured to coexist in a tire footprint during tire operation, where a footprint is the area of contact between a tire and a ground surface.

Various tire treads discussed above will now be described in association with the figures.

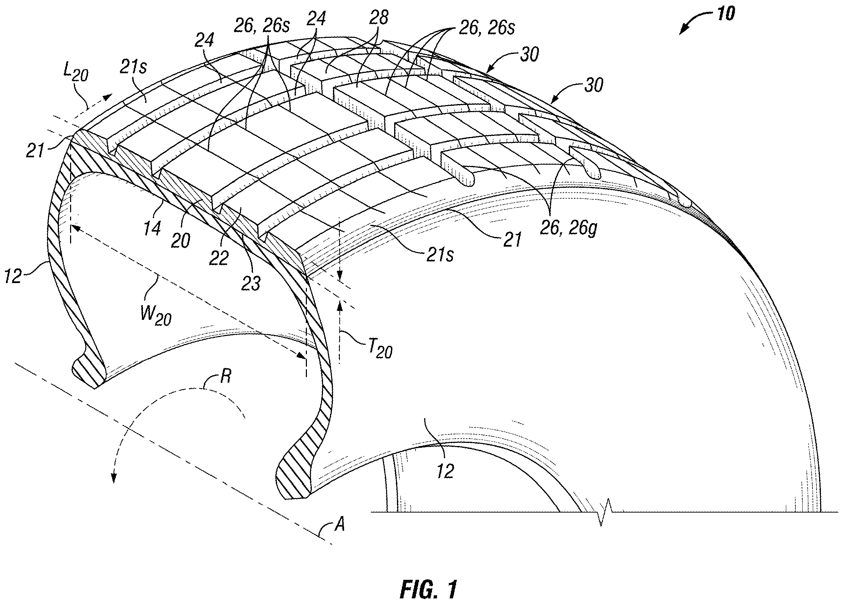

With reference to an illustrative example not falling under the scope of the claims and shown in FIG. **1****,** a pneumatic tire **10** is shown. The tire **10** includes a pair of sidewalls **12** each extending radially outward from a rotational axis A of the tire and to a central portion **14** of the tire **10.** The central portion **14** of the tire includes a tread **20** having a thickness **T₂₀** extending depthwise in a radial direction toward the rotational axis A of the tire from an outer, ground-engaging side **22** of the tread **20** to a bottom side **24** for attachment and bonding to the tire. The tread also has a width **W₂₀** extending in a lateral direction between a pair of opposing, lateral sides or side edges **21** of the tread arranged adjacent to sidewalls **12**. The tread also includes a pair of shoulders 21s arranged along each side **21** extending along the tread thickness **T₂₀.** With regard to the tread **20,** it is shown to include a plurality of longitudinal grooves **24** having a length extending in the direction of the tread length **L₂₀**, which in this instance is in a circumferential direction of the tire. The longitudinal grooves **24,** together with lateral discontinuities **26,** define a plurality of tread elements **28.** Lateral discontinuities comprise lateral grooves **26g** and lateral sipes **26s.** Tread elements **28** arranged adjacent one another to form a row of tread elements extending in the direction of the tread length form a rib **30.** The plurality of ribs include a pair of shoulder ribs **28s** bounded by a lateral side **21** of the tread width **W₂₀.** It is noted generally that any lateral groove, such as lateral grooves **26g,** may be inclined as any lateral sipe, such as lateral sipes **26**

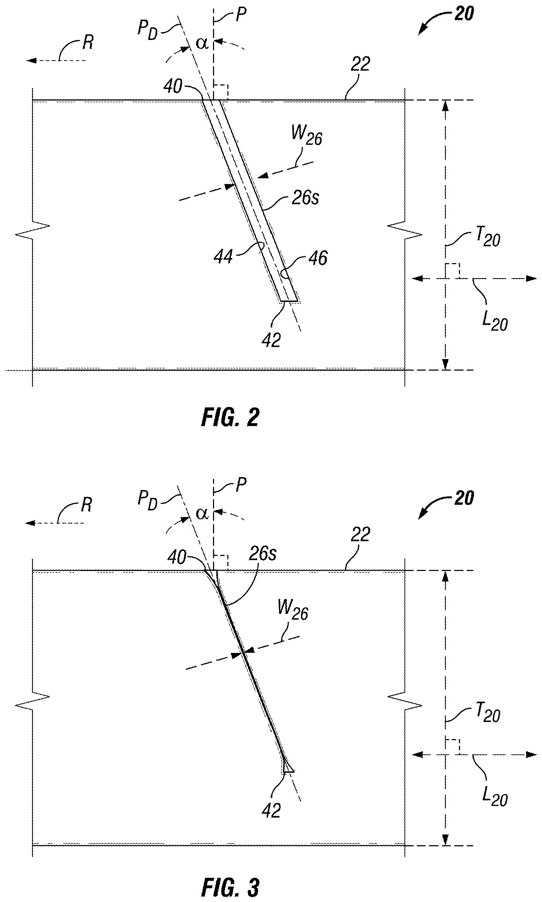

With reference now to FIG. **2****,** a lateral sipe **26s** from FIG. **1** is shown in a new or unworn stage. Lateral sipe **26s** forms one of a plurality of lateral sipes **26s** arranged at different locations along the tread length and width, where each are characterized the same, meaning, each include the same features. Lateral sipe **26s** has a width **W₂₆** (which is also referred to a "thickness" of the sipe) and a height **H₂₆** that extends into the depth of the tread thickness **T₂₀** between a first terminal end **40** and a second terminal end **42** along a path **P_{D}.** This path **P_{D}** is defined to extend midway across the width **W₂₆** between a pair of opposing faces **44, 46** of the tire tread **20** forming the lateral sipe **26s,** the path extending midway between these opposing faces **44, 46** for the full depth of the lateral sipe. The sipe width **W₂₆** remains constant as the sipe extends deeper into the tread thickness from the first terminal end **40.** Because path **P_{D}** is linear, the angle **α** by which the path **P_{D}** is positively angled (biased) relative to the direction of the tread thickness **T₂₀** is also the average inclination angle for the path **P_{D}.** With brief reference to the opposing terminal ends **40, 42** of the depthwise extension of lateral sipe **26s,** the first terminal end **40** is located closest to the outer, ground-engaging side **22** of the tread **20** relative to the second terminal end **42.** While it is contemplated that the first terminal end **40** may be arranged below the outer, ground-engaging side **22,** such as when the lateral sipe **26s** is a submerged sipe intended to become exposed to the outer, ground-engaging side **22** after an intervening thickness of the tire tread is worn away or otherwise removed, the first terminal end 40 is arranged along the outer, ground-engaging side **22.**

While the lateral sipe **26s** has been described in FIG. **2** as extending depthwise within the tread thickness **T₂₀** along a path **P_{D}**, the sipe can also be described with reference to the pair of opposing faces **44, 46** of the tread that form and define the lateral sipe **26s.** Specifically, the first face **44** of the pair of opposing faces extends along a first path **P1_{D},** while the second face **46** of the pair of opposing faces extends along a second path **P2_{D}.** Because the width **W₂₆** of the lateral sipe **26s** remains constant along the depthwise extension of the sipe, at least one the first and second paths **P1_{D}**, **P2_{D}** follow a path the same as path **P_{D}.** It is appreciated that for the lateral sipe **26s** shown in FIG. **2**, paths **P_{D}, P1_{D}**, **P2_{D}**, as well as the width **W₂₆** may be characterized in any manner contemplated herein.

With reference now to FIG. 3, the lateral sipe 26s of FIG. 2, shown in an undeformed, normally open configuration, is now shown in a closed configuration where the lateral sipe **26s** has been deformed by way of the Poisson effect. In view thereof, the sipe width **W₂₆** in the undeformed configuration is configured to articulate between the open configuration and the closed configuration as the tire rotates during tire operation, where in the closed configuration, the pair of opposing faces **44**, **46** at or near the first terminal end 40 engage one another while the pair of opposing faces **44**, **46** at or near the second terminal end **42** remain spaced apart.

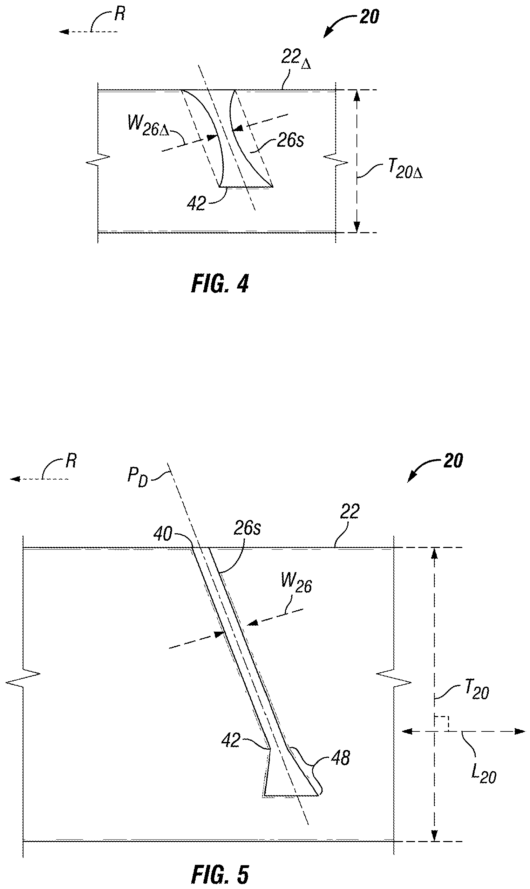

Reference is now made to FIG. **4**, where the tread **20** and sipe **26s** of FIGS. **2** and **3** are now shown in a worn stage. In this worn stage, the tread thickness has been worn to a thinner, worn thickness **T_{20Δ}** such that the outer, ground-engaging side **22Δ** has moved deeper into the tread thickness. Particularly, the tread **20** is shown in a loaded state during tire operation with the tread **20** being compressed, but where the lateral sipe **26s** remains in an open configuration without closing as it did in the unworn state shown in FIG. **3**. With reference to the dashed lines, the tread **20** and lateral sipe **26s** are shown in the worn but unloaded state prior to tire operation. By utilizing the sipe widths discussed herein, whether directly or by use of the sipe width-to-height ratios, the sipe is able to remain open at a worn stage of the tread thickness.

In addition to, or in lieu of using the sipe widths discussed herein, a submerged void may be arranged at the depthwise terminal end (that is, at the second terminal end of the sipe) to permit an open arrangement at a worn stage of the positively inclined lateral discontinuity. In the illustrative example not falling under the scope of the claims and shown in FIG. **5**, a positively inclined lateral discontinuity **26** includes a lateral sipe **26s** and a lateral void **48** located at the second terminal end **42** of the lateral sipe **26s**. While the lateral void **48** may comprise any void of any shape having a width that is wider than lateral sipe **26s**, in this embodiment, the lateral void **48** forms a lateral groove with a gradually increasing width **W₄₈** that increases as the lateral void **48** extends deeper into the tread thickness.

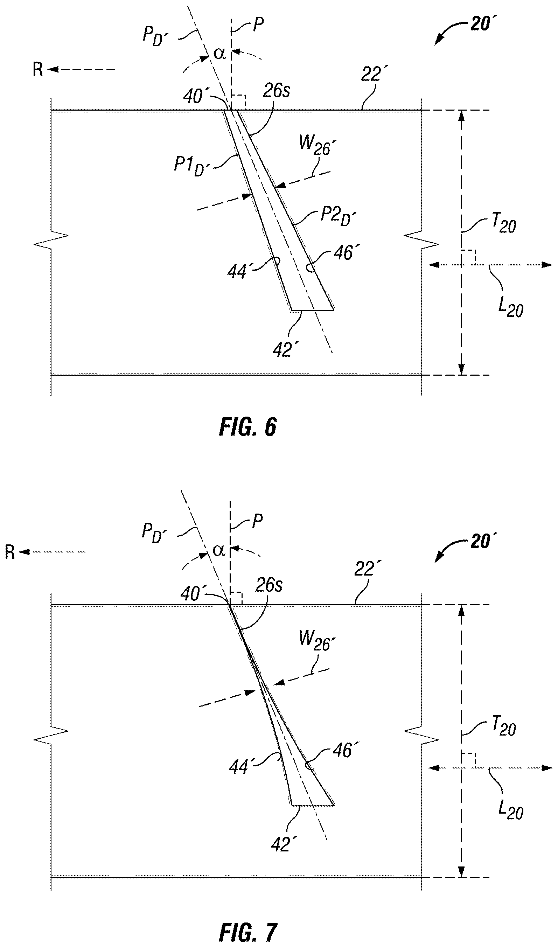

With reference now to FIG. **6**, an alternative lateral sipe **26s'** to the sipe **26s** of FIG. **2** is shown. The lateral sipe **26s'** has a width W**_{26'}** and a height **H_{26'}** that extends into the depth of the tread thickness **T_{20'}** between a first terminal end 40' and a second terminal end **42'** along a path **P_{D'}.** This path **P_{D'}** is defined to extend midway across the width **W_{26'}** between a pair of opposing faces **44', 46'** of the tire tread **20'** forming the lateral sipe **26s',** the path extending midway between these opposing faces **44'**, **46'** for the full depth of the lateral sipe. The sipe width **W_{26'}** generally increases as the sipe extends deeper into the tread thickness from the first terminal end **40',** where the depthwise extension of the lateral sipe can also be described as having a thin portion and a wide portion, the thin portion having a width that is less than a width of the wide portion. In the embodiment shown, the increase in width is achieved linearly and continuously. With brief reference to the opposing terminal ends **40', 42'** of the depthwise extension of lateral sipe **26s',** the first terminal end **40'** is located closest to the outer, ground-engaging side **22'** of the tread **20'** relative to the second terminal end **42'.** While it is contemplated that the first terminal end **40'** may be arranged below the outer, ground-engaging side **22',** such as when the lateral sipe 26s' is a submerged sipe intended to become exposed to the outer, ground-engaging side **22'** after an intervening thickness of the tire tread is worn away or otherwise removed, in the embodiment shown, the first terminal end **40** is arranged along the outer, ground-engaging side **22'.**

While the lateral sipe **26'** has been described in FIG. **6** as extending depthwise within the tread thickness **T_{20'}** along a path **P_{D'}**, the sipe can also be described with reference to the pair of opposing faces **44', 46'** of the tread that form and define the lateral sipe **26s'.** Specifically, the first face **44'** of the pair of opposing faces extends along a first path **P1_{D'}**, while the second face **46'** of the pair of opposing faces extends along a second path **P2_{D}**,. Because the width **W_{26'}** of the lateral sipe **26s'** varies along the depthwise extension of the sipe, at least one the first and second paths **P1_{D'}**, **P2_{D'}** follow a path different from path **P_{D'}**. It is appreciated that for the lateral sipe **26s'** shown in FIG. **6****,** paths **P_{D'}**, **P1_{D'}**, **P2_{D'},** as well as the width **W_{26'}** may be characterized in any manner contemplated herein.

With reference now to FIG. **7**, the lateral sipe **26s'** of FIG. **6****,** shown in an undeformed, normally open configuration, is now shown in a closed configuration where the lateral sipe **26s'** has been deformed due to the Poisson effect. In view thereof, the sipe width **W_{26'}** in the undeformed configuration is configured to articulate between the open configuration and the closed configuration as the tire rotates during tire operation, where in the closed configuration, the pair of opposing faces **44', 46'** at or near the first terminal end **40'** engage one another while the pair of opposing faces **44', 46'** at or near the second terminal end **42'** remain spaced apart.

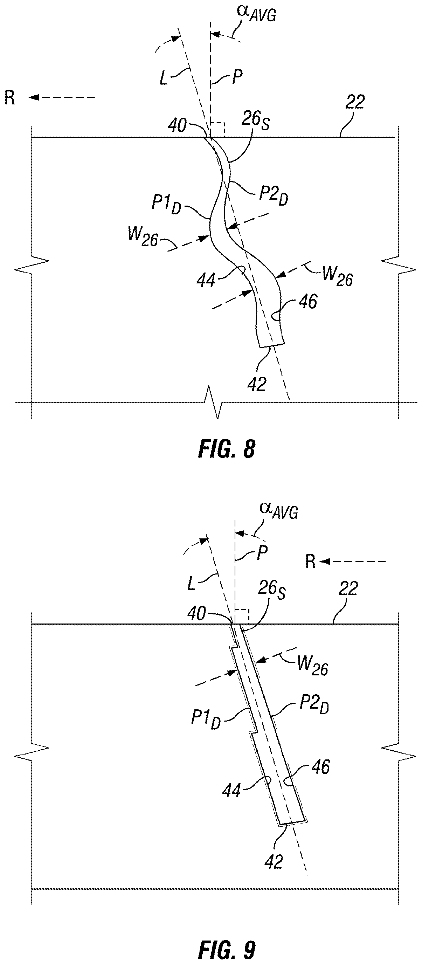

Previously, it was described that a lateral sipe may extend into the tread depth along any desired path, so long as the average inclination angle is positive. For example, with reference to FIG. **8****,** a lateral sipe **26s** is shown intending into the tread thickness **T₂₀** along a path **P_{D}** that is non-linear. More specifically, the non-linear path **P_{D}** is curvilinear. Opposing faces 44, 46 extend along first and second paths **P1_{D}**, **P2_{D}** that are also non-linear and more specifically curvilinear. A line **L_{D}** is shown extending at a constant angle **α** relative to plane P, representing the average inclination angle for the non-linear path **P_{D}.** In one example, the line **L_{D}** is generated from the non-linear path using linear regression. By further example, with reference now to FIG. **9**, a lateral sipe **26s** is shown intending into the tread thickness **T₂₀** along a path **P_{D}** that is non-linear. More specifically, the non-linear path **P_{D}** is stepped, meaning, it is formed of a plurality of linear segments. Opposing faces **44**, **46** extend along first and second paths **P1_{D}**, **P2_{D},** one of which is non-linear and more specifically stepped, while the other is linear. A line **L_{D}** is shown extending at a constant angle **α** relative to plane **P**, representing the average inclination angle for the non-linear path **P_{D}.** In each of FIGS. **8** and **9**, the sipe width **W_{26'}** generally increases as the sipe extends deeper into the tread thickness from the first terminal end 40, where the depthwise extension of the lateral sipe can also be described as having a thin portion and a wide portion, the thin portion having a width that is less than a width of the wide portion.

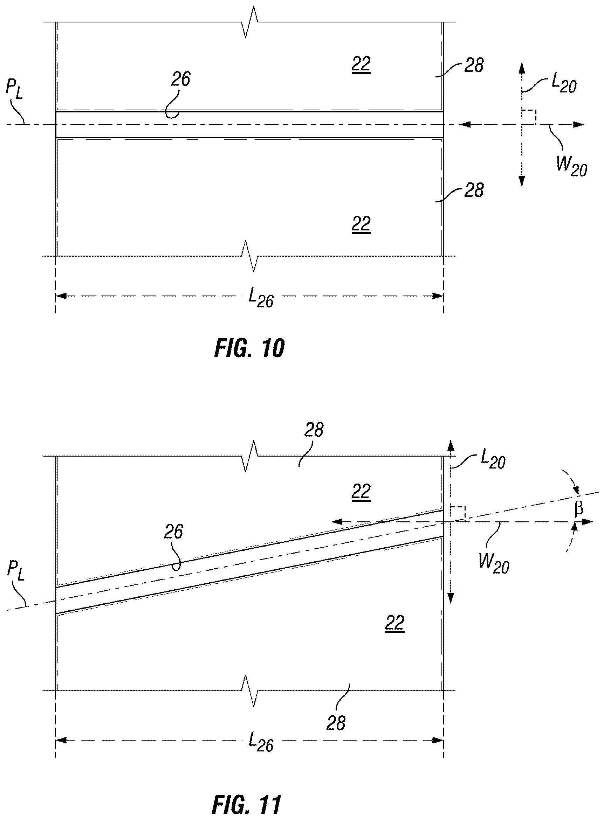

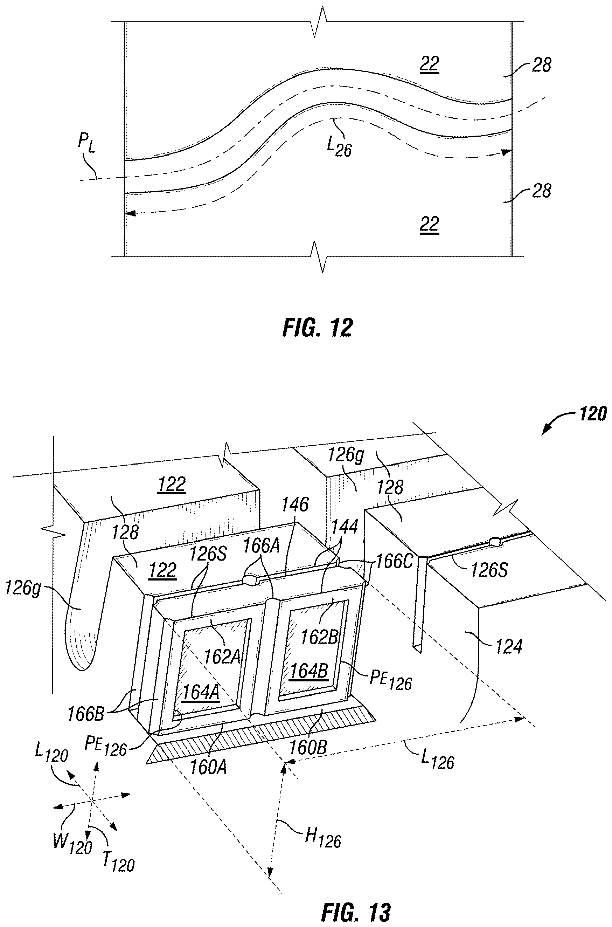

As stated more generally above, the length of the lateral sipe may extend along any desired path at least partially extending in a lateral direction of the tire tread. With reference to FIG. **10**, a top elevational view of the lateral sipe **26s** shown in FIG. **2** is depicted extending into the outer, ground-engaging side **22** of the tread **20**. The length **L₂₆** of the lateral sipe 26s is shown extending linearly along path **P_{L}** in the lateral direction **W₂₀** of the tire tread (that is, in the direction of the tread width), unbiased thereto. Optionally, in other exemplary instances, with reference to FIG. **11**, a lateral sipe **26s** is shown extending linearly along its length **L₂₆** along path **P_{L},** but which extends partially in the lateral direction **W₂₀** of the tire tread. That is, in other words, the path **P_{L}** is biased to the lateral direction of the tire tread by any angle β so long as the angle is equal to or less than 45 degrees. In another optional exemplary instance, with reference to FIG. **12**, a lateral sipe **26s** is shown extending non-linearly along its length **L₂₆** along path **P_{L}** in the lateral direction **W₂₀** of the tire tread. The non-linear path may form any desired non-linear path, such as any curvilinear path or any path composed of linear segments. The non-linear path is a curvilinear path that includes a plurality of undulations.

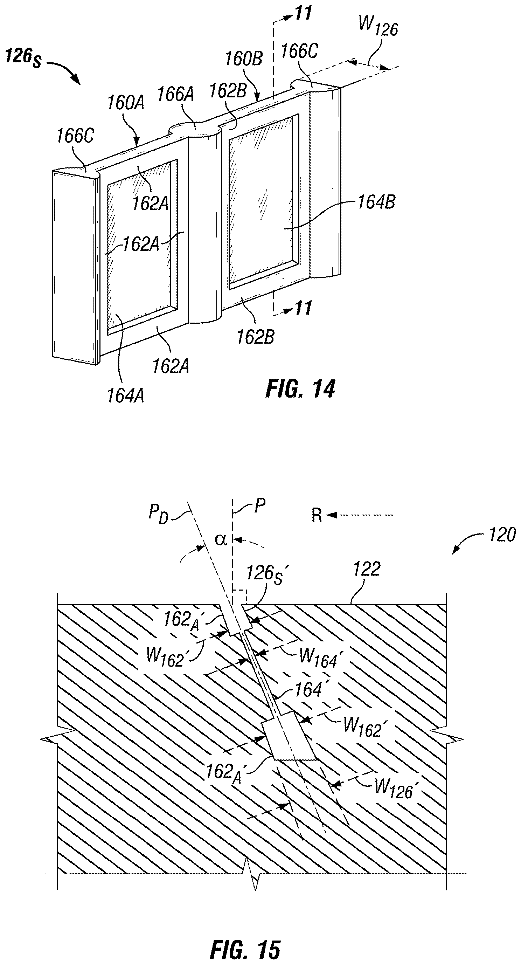

As stated previously, the adaptation of positively inclining a sipe and altering its thickness to increase with increasing depth may be applied to any other desired sipe. For example, these features may be applied to a windowpane sipe. With reference to FIGS. **13** and **14****,** conventional windowpane sipes are shown. In FIG. **13****,** a tire tread **120** is shown that includes a windowpane sipe **126s.** The tire tread **120** includes a plurality of tread blocks **128** separated by longitudinal grooves **124** and lateral grooves **126g.** The tire tread **120** extends in directions of the tread length **L₁₂₀,** tread width **W₁₂₀,** and tread thickness **T₁₂₀**. Sipe **126s** has a variable width **W₁₂₆** (a "thickness") extending perpendicular to its height **H₁₂₆** and length **L₁₂₆.** As best seen in FIG. **13****,** each sipe **126s** is arranged between opposing faces **144, 146** of the tread extending within the tread thickness.

With continued reference to FIG. **13** as well as to FIG. **14****,** which represents the sipe formed in the tread of FIG. **13** (that is, the void forming the sipe within the tread). With specific regard to sipe **126s,** the sipe is described as having a variable width **W₁₂₆.** The variableness in the width is at least provided by a first sipe portion **160A** having a first thick portion **162A** extending at least partially around a perimeter of a first thin portion **164A** and a second sipe portion **160B** having a second thick portion **162B** extending at least partially around a perimeter of a second thin portion **164B,** the first sipe portion spaced apart from the second sipe portion along the sipe length **L₁₂₆.** Of course, first thin portion **164A** has a width **W₁₆₄** that is less than a width **W₁₆₂** of the first thick portion **162A,** while second thin portion **164B** has a width **W₁₆₄** that is less than a width **W₁₆₂** of the second thick portion **162B**. It is apparent in FIG. **14** that first thick portion **162A** completely surrounds first thin portion **164B** along perimeter **PE₁₂₆,** while second thick portion **162B** completely surrounds second thin portion **164B** along perimeter **PE₁₂₆.** It is also noted that sipe **126s** optionally includes a first upright void feature **166A** arranged between and in fluid connection with each of the first and second sipe portions **160A, 160B.** Sipe **126s** also optionally includes a second upright void feature **166B** arranged in fluid connection with the first sipe portion **160A,** the first sipe portion **160A** arranged between the first and second upright void features **166A, 166B,** and a third upright void feature **166C** arranged in fluid connection with the second sipe portion **160B,** the second sipe portion **160B** arranged between the first and third upright void features **166A, 166C.**

In FIG. **15****,** the conventional windowpane sipe **126s** of FIGS. **13** and **14** is shown positively inclined and having a width that increases with increasing depth. Specifically, adapted windowpane sipe **126s'** is shown to extend along path **P_{D}** having an average inclination angle α that is positive. As to the width **W_{126'},** for each of the first thick portion **162A'** and the first thin portion **164A'**, the respective widths **W_{162'}**, **W_{164'}** increase as the sipe **126s'** extends deeper into the tread thickness to provide the increasing width **W_{126'}.** Accordingly, any desired sipe may be adapted to being positively inclined and having a width that increases with increasing tread depth. The depthwise extension of the lateral windowpane sipe **126s'** can also be described as having a thin portion (that is, the portion associated with each thin portion **164A', 164B'**) and a wide portion (that is, the portion associated with each thick portion **162A', 162B'** located at the depthwise terminal end of sipe **126'**), the thin portion having a width that is less than a width of the wide portion.

To the extent used, the terms "comprising," "including," and "having," or any variation thereof, as used in the claims and/or specification herein, shall be considered as indicating an open group that may include other elements not specified. The terms "a," "an," and the singular forms of words shall be taken to include the plural form of the same words, such that the terms mean that one or more of something is provided. The terms "at least one" and "one or more" are used interchangeably. The term "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (i.e., not required) feature of the embodiments. Ranges that are described as being "between a and b" are inclusive of the values for "a" and "b" unless otherwise specified.

## Claims

1. A tire tread (20), comprising:
a length (L₂₀) extending in a longitudinal direction, the longitudinal direction being a circumferential direction when the tread (20) is arranged on a tire (10);
a width extending (W₂₀) in a lateral direction, the lateral direction being perpendicular to the longitudinal direction;
a thickness (T₂₀) extending in a depthwise direction from an outer, ground-engaging side (22) of the tread (20), the depthwise direction being perpendicular to both the longitudinal direction and the widthwise direction of the tread (20);
a lateral sipe (26s) arranged within the tread (20), the sipe (26s) having a length (L₂₆) extending primarily in the direction of the tread width (W₂₀) and a width (W₂₆) extending perpendicular to the lateral sipe length (L₂₆), the sipe (26s) having a depthwise extension extending into the tread thickness (T₂₀) from a first terminal end (40) to a second terminal end (42) along a path (P_{D}) by a height measured in the direction of the tread thickness (T₂₀), the first terminal end (40) being arranged closest to the outer, ground-engaging side (22) relative to the second terminal end (42), the path (P_{D}) having an average inclination angle that is measured in the longitudinal direction of the tread (20) relative to the depthwise direction, the average inclination angle being angled toward an intended forward rotating direction of the tread (20) in the longitudinal direction as the path extends from the second terminal end (42) towards the first terminal end (40), such that the first terminal end (40) is located ahead of the second terminal end (42) in the intended forward rotating direction of the tread (20),
where the sipe width (W₂₆) is formed by a pair of opposing faces (44, 46) of the tread (20) extending depthwise within the tread thickness (T₂₀), the sipe width (W₂₆) being variable and increasing as the sipe extends deeper into the tread thickness from the first terminal end (40) and towards the second terminal end (42), whereby the sipe width (W₂₆) is configured to, at an unworn stage, close along at least a portion of the sipe (26s) depth during operation of a loaded tire (10) whereby the pair of opposing faces (44, 46) contact, and whereby the sipe width (W₂₆) is configured to, at a worn stage, remain open during operation of the loaded tire (10) whereby the pair of opposing faces (44, 46) remain spaced apart, where in the worn stage the tread thickness (T₂₀) is 25% worn at least along a portion of the tread (20),
the lateral sipe (26s) having a width-to-height ratio associating the sipe width (W₂₆) to the sipe height, the width-to-height ratio equaling 1:10 to 1:40.

2. The tire tread (20) of claim 1, where the sipe width (W₂₆) increases linearly.

3. The tire tread (20) of claim 2, where the sipe width (W₂₆) increases non-linearly.

4. The tire tread (20) of claim 3, where the sipe width (W₂₆) increases at least partially in stepped increments.

5. The tire tread (20) of any one of claims 1 to 4, where the sipe width (W₂₆) increases across the full length of the sipe (26s).

6. The tire tread (20) of any one of claims 1 to 5, where the sipe (26s) extends into the tread (20) from the outer, ground-engaging side (22) of the tread (20), such that the first terminal end (40) of the sipe (26s) is arranged along the outer, ground-engaging side (22).

7. The tire tread (20) according to any one of claims 1 to 6, where the length of the sipe (26s) extends along a linear path.

8. The tire tread (20) according to claim 7, where the linear path extends in the lateral direction of the tread (20).

9. The tire tread (20) according to any one of claims 1 to 8, where the first terminal end (40) has a width equal to 0 to 0.2 mm.

10. The tire tread (20) according to any one of claims 1 to 9, where the second terminal end (42) has a width equal to or greater than 0.15 mm.

11. The tire tread (20) according to any one of claims 1 to 10, where the sipe width (W₂₆) is equal to 0 to 0.2 mm at any location along the depthwise extension of the sipe (26s).

12. The tire tread (20) according to any one of claims 1 to 11, where the pair of opposing faces extend to the second terminal end (42) of the sipe (26s) .

13. The tire tread (20) according to any one of claims 1 to 12, where the lateral sipe (26s) forms one of a plurality of lateral sipes (26s) arranged at different locations along the tread length(L₂₀) and width (W₂₀).

14. A method of forming a lateral sipe (26s) in a tire tread (20), the tire tread (20) having a length (L₂₀) extending in a longitudinal direction, the longitudinal direction being a circumferential direction when the tread (20) is arranged on a tire (10), a width (W₂₀) extending in a lateral direction, the lateral direction being perpendicular to the longitudinal direction, and a thickness (T₂₀) extending in a depthwise direction from an outer, ground-engaging side (22) of the tread (20), the depthwise direction being perpendicular to both the longitudinal direction and the widthwise direction of the tread (20), the method comprising:
determining for improved wear performance an optimum positive inclination angle for a lateral void (26) that remains open during tire (10) operation, wherein a positive angle is an angle that extends in the direction of intended tire rotation relative the direction of the tread thickness as the angle extends towards the outer, ground-engaging side (22),
forming a lateral sipe (26s) within the tread thickness (T₂₀), the lateral sipe (26s) having a length (L₂₆) extending primarily in the direction of the tread width (W₂₀) and a width (W₂₀) extending perpendicular to the lateral sipe length (L₂₆), the lateral sipe (26s) having a depthwise extension extending into the tread thickness (T₂₀) from a first terminal end (40) to a second terminal end (42) along a path (P_{D}) by a height measured in the direction of the tread thickness (T₂₀), the first terminal end (40) being arranged closest to the outer, ground-engaging side (22) relative to the second terminal end (42), the path (P_{D}) having an average inclination angle that is greater than the optimum positive inclination angle, the average inclination angle being measured in the longitudinal direction of the tread (20) relative to the depthwise direction, the average inclination angle being angled toward an intended forward rotating direction of the tread (20) in the longitudinal direction as the path extends from the second terminal end (42) towards the first terminal end (40), such that the first terminal end (40) is located ahead of the second terminal end (42) in the intended forward rotating direction of the tread, the lateral sipe (26s) characterized as having a width-to-height ratio associating the lateral sipe width (W₂₆) to the sipe height, the width-to-height ratio equaling 1:10 to 1:40, where the lateral sipe (26s) has a width (W₂₆) formed by a pair of opposing faces (44, 46) of the tread (20) extending depthwise within the tread thickness (T₂₀), the sipe width (W₂₆) being variable and increasing as the sipe extends deeper into the tread thickness from the first terminal end and towards the second terminal end (42), whereby the sipe width (W₂₆) is configured to, at an unworn stage, close along at least a portion of the sipe (26s) depth during operation of a loaded tire (10) whereby the pair of opposing faces (44, 46) contact, and whereby the sipe width (W₂₆) is configured to, at a worn stage, remain open during operation of the loaded tire (10) whereby the pair of opposing faces (44, 46) remain spaced apart, where in the worn stage the tread thickness (T₂₀) is 25% worn at least along a portion of the tread (20).

## Patentansprüche

1. Reifenlauffläche (20), umfassend:
eine Länge (L₂₀), die sich in einer Längsrichtung erstreckt, wobei die Längsrichtung eine Umfangsrichtung ist, wenn die Lauffläche (20) auf einem Reifen (10) angeordnet ist;
eine Breite (W₂₀), die sich in einer Seitenrichtung erstreckt, wobei die Seitenrichtung senkrecht zur Längsrichtung ist;
eine Dicke (T₂₀), die sich in einer Tiefenrichtung von einer äußeren, bodenberührenden Seite (22) der Lauffläche (20) aus erstreckt, wobei die Tiefenrichtung senkrecht sowohl zur Längsrichtung als auch zur Breitenrichtung der Lauffläche (20) ist;
eine Seitenlamelle (26s), die innerhalb der Lauffläche (20) angeordnet ist, wobei die Lamelle (26s) eine Länge (L₂₆) hat, die sich in erster Linie in Richtung der Laufflächenbreite (W₂₀) erstreckt, und eine Breite (W₂₆), die sich senkrecht zur Seitenlamellenlänge (L₂₆) erstreckt, wobei die Lamelle (26s) eine Tiefenausdehnung hat, die sich in die Laufflächendicke (T₂₀) von einem ersten Terminalende (40) bis zu einem zweiten Terminalende (42) entlang eines Pfades (P_{D}) über eine Höhe erstreckt, die in der Richtung der Laufflächendicke (T₂₀) gemessen wird, wobei das erste Terminalende (40) in Bezug auf das zweite Terminalende (42) am nächsten an der äußeren erdberührenden Seite (22) angeordnet ist, wobei der Pfad (P_{D}) einen durchschnittlichen Neigungswinkel hat, der in der Längsrichtung der Lauffläche (20) relativ zur Tiefenrichtung gemessen wird, wobei der durchschnittliche Neigungswinkel in Richtung einer beabsichtigten Vorwärtsdrehung der Lauffläche (20) in Längsrichtung geneigt ist, wenn sich der Pfad vom zweiten Terminalende (42) in Richtung auf das erste Terminalende (40) erstreckt, derart dass sich das erste Terminalende (40) vor dem zweiten Terminalende (42) in der vorgesehenen Richtung der Vorwärtsdrehung der Lauffläche (20) befindet, wobei die Lamellenbreite (W₂₆) durch ein Paar von gegenüberliegenden Flächen (44, 46) der Lauffläche (20) gebildet wird, die sich in die Tiefe innerhalb der Laufflächendicke (T₂₀) erstreckt, wobei die Lamellenbreite (W₂₆) variabel ist und sich vergrößert, wenn sich die Lamelle tiefer in die Laufflächendicke hinein vom ersten Terminalende (40) aus und in Richtung des zweiten Terminalendes (42) erstreckt, wobei die Lamellenbreite (W₂₆) so ausgelegt ist, dass sie sich in einem nicht abgenutzten Zustand während des Betriebs eines beladenen Reifens (10) über mindestens einen Teil der Tiefe der Lamelle (26s) schließt, wobei das Paar der gegenüberliegenden Flächen (44, 46) in Kontakt kommt, und wobei die Lamellenbreite (W₂₆) so ausgelegt ist, dass sie in einem abgenutzten Zustand während des Betriebs des beladenen Reifens (10) offen bleibt, wobei das Paar gegenüberliegender Flächen (44, 46) mit Abstand angeordnet bleibt, wobei im abgenutzten Zustand die Laufflächendicke (T₂₀) zumindest entlang eines Teils der Lauffläche (20) zu 25 % abgenutzt wird,
wobei die seitliche Lamelle (26s) ein Verhältnis von Breite zu Höhe aufweist, das die Lamellenbreite (W₂₆) mit der Lamellenhöhe verbindet, wobei das Verhältnis von Breite zu Höhe 1:10 bis 1:40 beträgt.

2. Reifenlauffläche (20) nach Anspruch 1, wobei sich die Lamellenbreite (W₂₆) linear vergrößert.

3. Reifenlauffläche (20) nach Anspruch 2, wobei sich die Lamellenbreite (W₂₆) nichtlinear vergrößert.

4. Reifenlauffläche (20) nach Anspruch 3, wobei sich die Lamellenbreite (W₂₆) zumindest teilweise in stufenweisen Schritten vergrößert.

5. Reifenlauffläche (20) nach einem der Ansprüche 1 bis 4, wobei sich die Lamellenbreite (W₂₆) über die volle Länge der Lamelle (26s) vergrößert.

6. Reifenlauffläche (20) nach einem der Ansprüche 1 bis 5, wobei die Lamelle (26s) sich in die Lauffläche (20) von der äußeren, bodenberührenden Seite (22) der Lauffläche (20) erstreckt, derart dass das erste Terminalende (40) der Lamelle (26s) entlang der äußeren bodenberührenden Seite (22) angeordnet ist.

7. Reifenlauffläche (20) nach einem der Ansprüche 1 bis 6, wobei die Länge der Lamelle (26s) sich entlang eines linearen Pfades erstreckt.

8. Reifenlauffläche (20) nach Anspruch 7, wobei sich der lineare Pfad in der seitlichen Richtung der Lauffläche (20) erstreckt.

9. Reifenlauffläche (20) nach einem der Ansprüche 1 bis 8, wobei das erste Terminalende (40) eine Breite von 0 bis 0,2 mm hat.

10. Reifenlauffläche (20) nach einem der Ansprüche 1 bis 9, wobei das zweite Terminalende (42) eine Breite von größer oder gleich 0,15 mm hat.

11. Reifenlauffläche (20) nach einem der Ansprüche 1 bis 10, wobei die Lamellenbreite (W₂₆) 0 bis 0,2 mm an jeder Stelle entlang der Tiefenausdehnung der Lamelle (26s) beträgt.

12. Reifenlauffläche (20) nach einem der Ansprüche 1 bis 11, wobei sich das Paar von gegenüberliegenden Flächen bis zum zweiten Terminalende (42) der Lamelle (26s) erstreckt.

13. Reifenlauffläche (20) nach einem der Ansprüche 1 bis 12, wobei die seitliche Lamelle (26s) eine aus der Vielzahl von seitlichen Lamellen (26s) bildet, die an verschiedenen Stellen entlang der Laufflächenlänge (L₂₀) und -breite (W₂₀) angeordnet sind.

14. Verfahren zum Bilden einer Seitenlamelle (26s) in einer Reifenlauffläche (20), wobei die Reifenlauffläche (20) eine Länge (L₂₀) hat, die sich in einer Längsrichtung erstreckt, wobei die Längsrichtung eine Umfangsrichtung ist, wenn die Lauffläche (20) auf einem Reifen (10) angeordnet ist, eine Breite (W₂₀), die sich in einer seitlichen Richtung erstreckt, wobei die seitliche Richtung senkrecht zur Längsrichtung ist, und eine Dicke (T₂₀), die sich in einer Tiefenrichtung von einer äußeren, bodenberührenden Seite (22) der Lauffläche (20) aus erstreckt, wobei die Tiefenrichtung senkrecht sowohl zur Längsrichtung als auch zur Breitenrichtung der Lauffläche (20) ist, wobei das Verfahren umfasst:
Bestimmen eines optimalen positiven Neigungswinkels für einen seitlichen Hohlraum (26), der während des Betriebs des Reifens (10) offen bleibt, um das Verschleißverhalten zu verbessern, wobei ein positiver Winkel ein Winkel ist, der sich in der Richtung der beabsichtigten Reifendrehung relativ zur Richtung der Laufflächendicke erstreckt, wenn sich der Winkel in Richtung der äußeren, bodenberührenden Seite (22) erstreckt,
Bilden einer seitlichen Lamelle (26s) innerhalb der Laufflächendicke (T₂₀), wobei die seitliche Lamelle (26s) eine Länge (L₂₆) hat, die sich in erster Linie in Richtung der Laufflächenbreite (W₂₀) erstreckt, und eine Breite (W₂₀), die sich senkrecht zur Länge (L₂₆) der seitlichen Lamelle (26s) erstreckt, wobei die seitliche Lamelle (26s) eine in die Tiefe gerichtete Ausdehnung hat, die sich in die Laufflächendicke (T₂₀) von einem ersten Terminalende (40) bis zu einem zweiten Terminalende (42) entlang eines Pfades (P_{D}) um eine Höhe erstreckt, die in der Richtung der Laufflächendicke (T₂₀) gemessen wird, wobei das erste Terminalende (40) in Bezug auf das zweite Terminalende (42) am nächsten an der äußeren bodenberührenden Seite (22) angeordnet ist, wobei der Pfad (P_{D}) einen durchschnittlichen Neigungswinkel hat, der größer als der optimale positive Neigungswinkel ist, wobei der durchschnittliche Neigungswinkel in der Längsrichtung der Lauffläche (20) relativ zur Tiefenrichtung gemessen wird, wobei der durchschnittliche Neigungswinkel zu einer Richtung der beabsichtigten Vorwärtsdrehung der Lauffläche (20) in der Längsrichtung hin abgewinkelt ist, wenn sich der Pfad vom zweiten Terminalende (42) zum ersten Terminalende (40) erstreckt, derart dass das erste Terminalende (40) sich vor dem zweiten Terminalende (42) in der beabsichtigten Richtung der Vorwärtsdrehung der Lauffläche befindet, wobei die seitliche Lamelle (26s) **dadurch gekennzeichnet ist, dass** sie ein Verhältnis von Breite zu Höhe aufweist, das die Breite (W₂₆) der seitlichen Lamelle mit der Höhe der Lamelle verbindet, wobei das Verhältnis von Breite zu Höhe gleich 1:10 bis 1:40 ist, wobei die seitliche Lamelle (26s) eine Breite (W₂₆) hat, die durch ein Paar von gegenüberliegenden Flächen (44, 46) der Lauffläche (20) gebildet wird, die sich in die Tiefe innerhalb der Laufflächendicke (T₂₀) erstrecken, wobei die Lamellenbreite (W₂₆) variabel ist und sich vergrößert, wenn sich die Lamelle tiefer in die Laufflächendicke vom ersten Terminalende aus und in Richtung des zweiten Terminalendes (42) erstreckt, wobei die Lamellenbreite (W₂₆) so ausgelegt ist, dass sie sich in einem nicht abgefahrenen Stadium während des Betriebs eines beladenen Reifens (10) entlang mindestens eines Teils der Lamellentiefe (26s) schließt, wobei das Paar der gegenüberliegenden Flächen (44, 46) in Kontakt kommt und wobei die Lamellenbreite (W₂₆) so ausgelegt ist, dass sie in einem abgenutzten Zustand während des Betriebs des belasteten Reifens (10) offen bleibt, wobei das Paar gegenüberliegender Flächen (44, 46) mit Abstand angeordnet bleibt, wobei im abgenutzten Stadium die Laufflächendicke (T₂₀) zumindest entlang eines Abschnitts der Lauffläche (20) zu 25 % abgenutzt wird.

## Revendications

1. Bande de roulement (20), comprenant :
une longueur (L₂₀) s'étendant dans une direction longitudinale, la direction longitudinale étant une direction circonférentielle lorsque la bande de roulement (20) est agencée sur un pneu (10) ;
une largeur (W₂₀) s'étendant dans une direction latérale, la direction latérale étant perpendiculaire à la direction longitudinale ;
une épaisseur (T₂₀) s'étendant dans une direction de profondeur depuis un côté extérieur de mise en prise avec le sol (22) de la bande de roulement (20), la direction de profondeur étant perpendiculaire à la fois à la direction longitudinale et à la direction de largeur de la bande de roulement (20) ;
une lamelle latérale (26s) agencée à l'intérieur de la bande de roulement (20), la lamelle (26s) ayant une longueur (L₂₆) s'étendant principalement dans la direction de la largeur de bande de roulement (W₂₀) et une largeur (W₂₆) s'étendant perpendiculairement à la longueur de lamelle latérale (L₂₆), la lamelle (26s) ayant une extension de profondeur s'étendant dans l'épaisseur de bande de roulement (T₂₀) depuis une première extrémité terminale (40) jusqu'à une seconde extrémité terminale (42) le long d'un trajet (P_{D}) d'une hauteur mesurée dans la direction de l'épaisseur de bande de roulement (T₂₀), la première extrémité terminale (40) étant agencée le plus près du côté extérieur de mise en prise avec le sol (22) par rapport à la seconde extrémité terminale (42), le trajet (P_{D}) ayant un angle d'inclinaison moyen qui est mesuré dans la direction longitudinale de la bande de roulement (20) par rapport à la direction de profondeur, l'angle d'inclinaison moyen étant incliné vers une direction de rotation vers l'avant prévue de la bande de roulement (20) dans la direction longitudinale au fur et à mesure que le trajet s'étend depuis la seconde extrémité terminale (42) vers la première extrémité terminale (40), de sorte que la première extrémité terminale (40) soit située devant la seconde extrémité terminale (42) dans la direction de rotation vers l'avant prévue de la bande de roulement (20),
dans laquelle la largeur de lamelle (W₂₆) est formée par une paire de faces opposées (44, 46) de la bande de roulement (20) s'étendant dans la direction de profondeur à l'intérieur de l'épaisseur de bande de roulement (T₂₀), la largeur de lamelle (W₂₆) étant variable et augmentant au fur et à mesure que la lamelle s'étend en profondeur dans l'épaisseur de bande de roulement depuis la première extrémité terminale (40) vers la seconde extrémité terminale (42), de telle manière que la largeur de lamelle (W₂₆) soit configurée, à un stade non usé, pour se fermer le long d'au moins une portion de la profondeur de lamelle (26s) au cours d'une utilisation d'un pneu chargé (10) afin que la paire de faces opposées (44, 46) viennent au contact l'une de l'autre, et de telle manière que la largeur de lamelle (W₂₆) soit configurée, à un stade usé, pour rester ouverte au cours d'une utilisation du pneu chargé (10) afin que la paire de faces opposées (44, 46) restent espacées l'une de l'autre, dans laquelle, au stade usé, l'épaisseur de bande de roulement (T₂₀) est 25 % usée au moins le long d'une portion de la bande de roulement (20),
la lamelle latérale (26s) ayant un rapport de largeur sur hauteur associant la largeur de lamelle (W₂₆) à la hauteur de lamelle, le rapport de largeur sur hauteur étant égal à 1:10 à 1:40.

2. Bande de roulement (20) selon la revendication 1, dans laquelle la largeur de lamelle (W₂₆) augmente linéairement.

3. Bande de roulement (20) selon la revendication 2, dans laquelle la largeur de lamelle (W₂₆) augmente non linéairement.

4. Bande de roulement (20) selon la revendication 3, dans laquelle la largeur de lamelle (W₂₆) augmente au moins partiellement par incréments échelonnés.

5. Bande de roulement (20) selon l'une quelconque des revendications 1 à 4, dans laquelle la largeur de lamelle (W₂₆) augmente sur toute la longueur de la lamelle (26s).

6. Bande de roulement (20) selon l'une quelconque des revendications 1 à 5, dans laquelle la lamelle (26s) s'étend dans la bande de roulement (20) depuis le côté extérieur de mise en prise avec le sol (22) de la bande de roulement (20), de sorte que la première extrémité terminale (40) de la lamelle (26s) soit agencée le long du côté extérieur de mise en prise avec le sol (22).

7. Bande de roulement (20) selon l'une quelconque des revendications 1 à 6, dans laquelle la longueur de la lamelle (26s) s'étend le long d'un trajet linéaire.

8. Bande de roulement (20) selon la revendication 7, dans laquelle le trajet linéaire s'étend dans la direction latérale de la bande de roulement (20).

9. Bande de roulement (20) selon l'une quelconque des revendications 1 à 8, dans laquelle la première extrémité terminale (40) a une largeur égale à 0 à 0,2 mm.

10. Bande de roulement (20) selon l'une quelconque des revendications 1 à 9, dans laquelle la seconde extrémité terminale (42) a une largeur supérieure ou égale à 0,15 mm.

11. Bande de roulement (20) selon l'une quelconque des revendications 1 à 10, dans laquelle la largeur de lamelle (W₂₆) est égale à 0 à 0,2 mm à n'importe quel emplacement le long de l'extension de profondeur de la lamelle (26s).

12. Bande de roulement (20) selon l'une quelconque des revendications 1 à 11, dans laquelle la paire de faces opposées s'étendent jusqu'à la seconde extrémité terminale (42) de la lamelle (26s).

13. Bande de roulement (20) selon l'une quelconque des revendications 1 à 12, dans laquelle la lamelle latérale (26s) forme l'une d'une pluralité de lamelles latérales (26s) agencées à des emplacements différents le long de la longueur de bande de roulement (L₂₀) et de la largeur de bande de roulement (W₂₀).

14. Procédé de formation d'une lamelle latérale (26s) dans une bande de roulement (20), la bande de roulement (20) ayant une longueur (L₂₀) s'étendant dans une direction longitudinale, la direction longitudinale étant une direction circonférentielle lorsque la bande de roulement (20) est agencée sur un pneu (10), une largeur (W₂₀) s'étendant dans une direction latérale, la direction latérale étant perpendiculaire à la direction longitudinale, et une épaisseur (T₂₀) s'étendant dans une direction de profondeur depuis un côté extérieur de mise en prise avec le sol (22) de la bande de roulement (20), la direction de profondeur étant perpendiculaire à la fois à la direction longitudinale et à la direction de largeur de la bande de roulement (20), le procédé comprenant :
la détermination, pour une performance d'usure améliorée, d'un angle d'inclinaison positive optimal pour un vide latéral (26) qui reste ouvert au cours d'une utilisation du pneu (10), dans lequel un angle positif est un angle qui s'étend dans la direction de rotation de pneu prévue par rapport à la direction de l'épaisseur de bande de roulement au fur et à mesure que l'angle s'étend vers le côté extérieur de mise en prise avec le sol (22),
la formation d'une lamelle latérale (26s) à l'intérieur de l'épaisseur de bande de roulement (T₂₀), la lamelle latérale (26s) ayant une longueur (L₂₆) s'étendant principalement dans la direction de la largeur de bande de roulement (W₂₀) et une largeur (W₂₀) s'étendant perpendiculairement à la longueur de lamelle latérale (L₂₆), la lamelle latérale (26s) ayant une extension de profondeur s'étendant dans l'épaisseur de bande de roulement (T₂₀) depuis une première extrémité terminale (40) jusqu'à une seconde extrémité terminale (42) le long d'un trajet (P_{D}) d'une hauteur mesurée dans la direction de l'épaisseur de bande de roulement (T₂₀), la première extrémité terminale (40) étant agencée le plus près du côté extérieur de mise en prise avec le sol (22) par rapport à la seconde extrémité terminale (42), le trajet (P_{D}) ayant un angle d'inclinaison moyen qui est supérieur à l'angle d'inclinaison positive optimal, l'angle d'inclinaison moyen étant mesuré dans la direction longitudinale de la bande de roulement (20) par rapport à la direction de profondeur, l'angle d'inclinaison moyen étant incliné vers une direction de rotation vers l'avant prévue de la bande de roulement (20) dans la direction longitudinale au fur et à mesure que le trajet s'étend depuis la seconde extrémité terminale (42) vers la première extrémité terminale (40), de sorte que la première extrémité terminale (40) soit située devant la seconde extrémité terminale (42) dans la direction de rotation vers l'avant prévue de la bande de roulement, la lamelle latérale (26s) étant **caractérisée en ce qu'**elle a un rapport de largeur sur hauteur associant la largeur de lamelle latérale (W₂₆) à la hauteur de lamelle, le rapport de largeur sur hauteur étant égal à 1:10 à 1:40, dans lequel la lamelle latérale (26s) a une largeur (W₂₆) formée par une paire de faces opposées (44, 46) de la bande de roulement (20) s'étendant dans la direction de profondeur à l'intérieur de l'épaisseur de bande de roulement (T₂₀) , la largeur de lamelle (W₂₆) étant variable et augmentant au fur et à mesure que la lamelle s'étend en profondeur dans l'épaisseur de bande de roulement depuis la première extrémité terminale vers la seconde extrémité terminale (42), de telle manière que la largeur de lamelle (W₂₆) soit configurée, à un stade non usé, pour se fermer le long d'au moins une portion de la profondeur de lamelle (26s) au cours d'une utilisation d'un pneu chargé (10) afin que la paire de faces opposées (44, 46) viennent au contact l'une de l'autre, et de telle manière que la largeur de lamelle (W₂₆) soit configurée, à un stade usé, pour rester ouverte au cours d'une utilisation du pneu chargé (10) afin que la paire de faces opposées (44, 46) restent espacées l'une de l'autre, dans laquelle, au stade usé, l'épaisseur de bande de roulement (T₂₀) est 25 % usée au moins le long d'une portion de la bande de roulement (20).
